# EUROPEAN PATENT APPLICATION

(11) **EP 0 639 489 A2**
(43) Date of publication of application: **22.02.1995**
(21) Application number: 94305698.6
(22) Date of filing: 01.08.1994
(51) Int. Cl.: B62B 7/08, E05D 3/02

(54) **Locking hinge**

(30) Priority: 20.08.1993 GB 9317432
(71) Applicant: BRITAX CHILDCARE LIMITED, Warwick CV34 6DE (GB)
(72) Inventor: Wills, Andrew Nelson, Clapham, London, S.W.4. (GB); Heithus, Roger, Bromley, Kent. (GB); Blomfield, Martin, Woking, Surrey (GB)
(74) Representative: Hollinghurst, Antony

(57) **Abstract**

First and second members (106, 120) of a push chair chassis, are pivotally interconnected by a locking hinge (28) having a manually releasable locking mechanism for securing the first member (106) at a predetermined orientation relative to the second member (114). The first member (106) has a cylindrical latch-receiving surface (130) co-axial with the hinge axis (100) and containing a latching recess (132). The locking mechanism comprises a detent (124) mounted on the second member (114) engageable in the latching recess (132) and a spring (128) for biassing the detent (124) into engagement with the latch-receiving surface (130). The detent (124) is coupled to a sliding sleeve (120), which is used to manually displace the detent (124) to a disengaged position clear of the latch-receiving surface (130). A pawl (140) then retains the detent (124) in its disengaged position until a cam (152) causes disengagement thereof when the first member (106) is at a second predetermined orientation relative to the second member (114).

## Description

This invention relates to a locking hinge of the type having first and second members pivotally interconnected for relative angular movement about a hinge axis and a manually releasable locking mechanism for securing the first member at a predetermined orientation relative to the second member, wherein the first member has a cylindrical latch-receiving surface co-axial with the hinge axis and containing a latching recess and the locking mechanism comprises a detent mounted on the second member engageable in the latching recess, a spring for biassing the detent into engagement with the latch-receiving surface, manually operable release means for displacing the detent to a disengaged position clear of the latch-receiving surface, automatically engaging interlock means for retaining the detent in its disengaged position, and cam means for causing disengagement of the interlock means when the first member is at a second predetermined orientation relative to the second member.

A locking hinge of this type is disclosed in US-A-4645371. The manually operable release means comprises a lever which has to be pivoted in order to disengage the detent. The present invention aims to provide a locking joint which can be released by gripping one of the pivotally interconnected members.

According to the invention, in a locking hinge of the type described above, the detent is fast with the manually operable release means which is slidably mounted on the second member.

An embodiment of the invention will now be described, by way of example, with reference to the accompanying drawings, in which:
Figure 1 is a side view of a pushchair having locking hinges in accordance with the invention erected for use and with the seat back in its upright position;
Figure 2 is a front view of the pushchair shown in Figure 1;
Figure 3 is a rear view of the pushchair shown in Figure 1;
Figure 4 is a side view of the pushchair shown in Figure 1 but with the pushchair frame partly folded;
Figure 5 is a side view of the pushchair shown in Figure 1 but with the frame fully folded;
Figure 6 is a plan view of one of the locking hinges of the pushchair shown in Figures 1 to 5;
Figure 7 is a schematic sectional view of the locking hinge shown in Figure 6, in an engaged position; and
Figure 8 is a schematic sectional view of the locking hinge shown in Figure 6 and 7, in a released position.

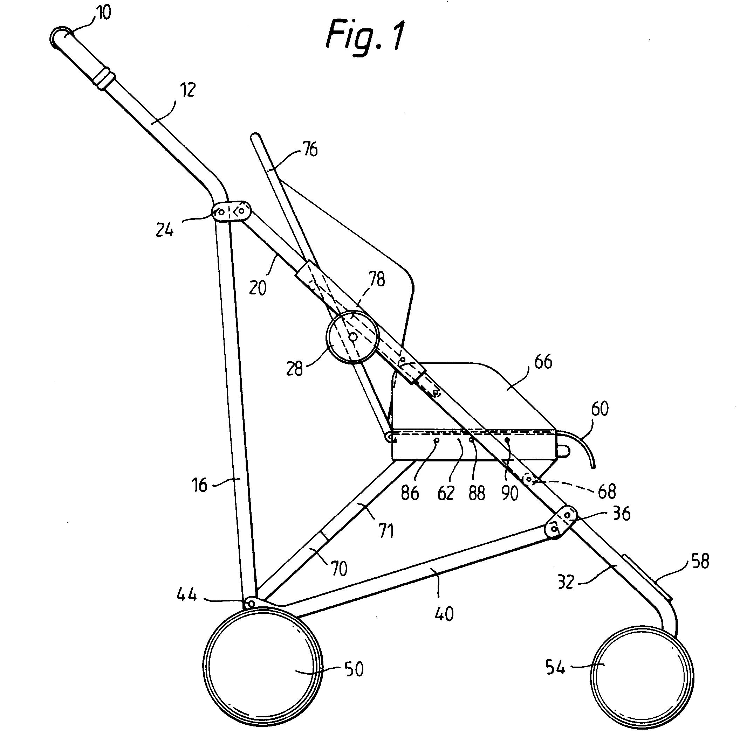

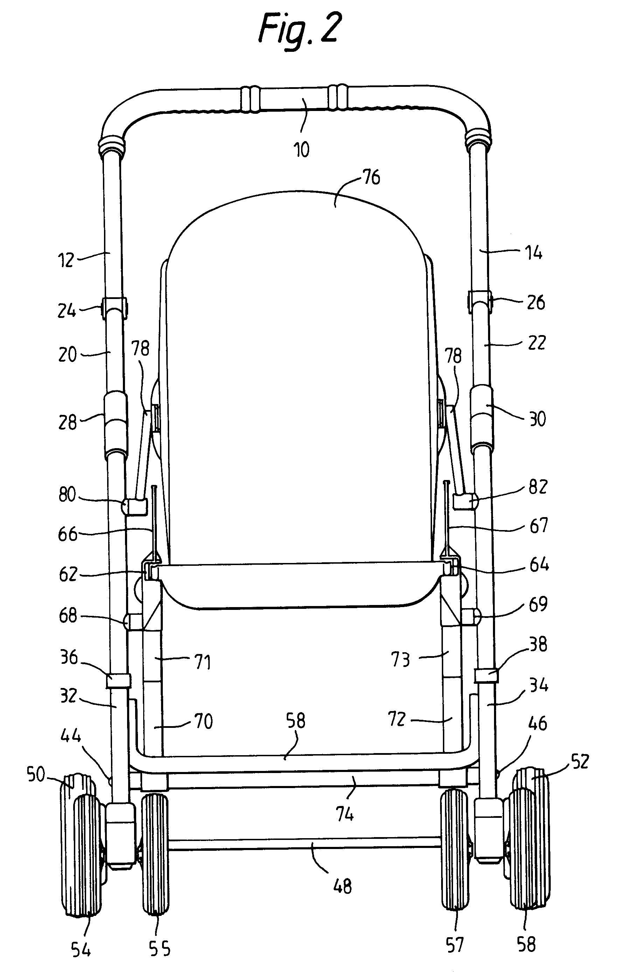

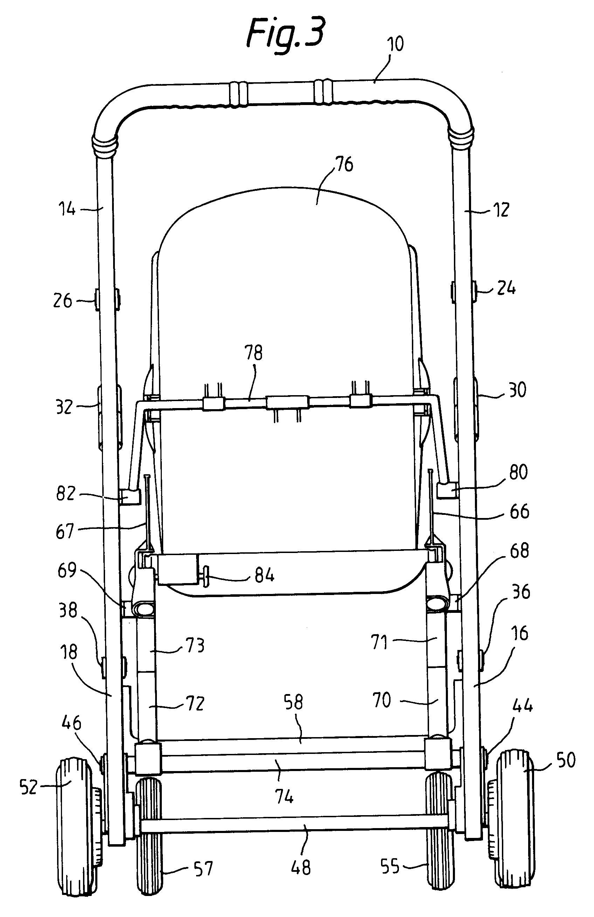

Referring to Figures 1 and 2, a pushchair comprises a one-piece U-shaped unit forming a handle 10, a pair of handle support members 12 and 14 and a pair of rear members 16 and 18. A respective upper front member 20, 22 is connected by a respective pivot joint 24, 26 to the one-piece U-shaped member 10, 12, 14 at the junctions between the handle support members 12 and 14 and the rear members 16 and 18 respectively. At its lower end, each of the upper front members 20 and 22 is connected by a respective pivot joint 28, 30 to a respective front leg 32, 34. Respective pivot joints 36, 38 at intermediate points on the front legs 28 and 30 are connected to the front end of transverse struts 40, the rear ends of which are connected to respective pivot joints 44 and 46 near the bottom ends of the rear legs 16 and 18. Below the pivot joints 44 and 46, the rear legs 16 and 18 support a transverse axle 48 (Figure 3) on which a pair of rear wheels 50 and 52 are journalled. A respective pair of front wheels 54, 55 and 56, 57 is mounted on castor joints secured to the bottom end of each front leg 32 and 34 so as to be capable of limited pivoting movement about a vertical axis as well as normal rotational movement. The front legs are interconnected by a footrest 58 (Figure 2).

The pushchair has a generally horizontal seat portion 60, which is slidably mounted in guide channels 62, 64 in respective seat side members 66, 67. The front end of each side members 66, 67 is connected by a respective pivot joint 68, 69 to the front legs 32, 34. Respective two-part telescopic struts 70, 71 and 72, 73 have their rear parts 70 and 72 pivotally attached to a transverse member 74 which extends between the pivot joints 44 and 46 on the rear legs 16 and 18. The front parts 71 and 73 of the telescopic struts support the back ends of the seat side members 66, 67. The struts 70 and 72 are at their minimum length when in the position illustrated in Figure 1 and can lengthen to permit the pushchair to be folded as will be explained hereinafter.

A backrest 76 is pivotally attached at its bottom end to the rear edge of the seat portion 60 and has its upper parts supported by a U-shaped member 78 (Figure 3) which has the ends of its limbs attached by pivot joints 80 and 82 to the front legs 22 and 34 respectively.

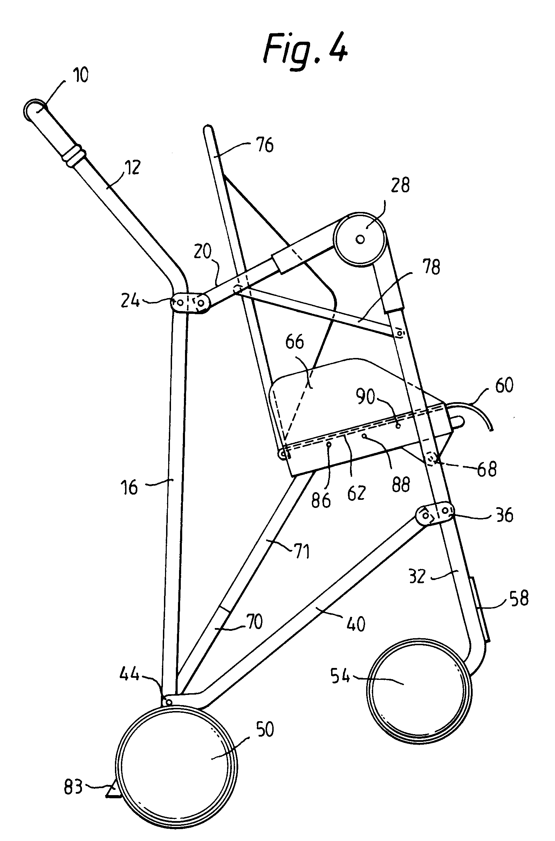

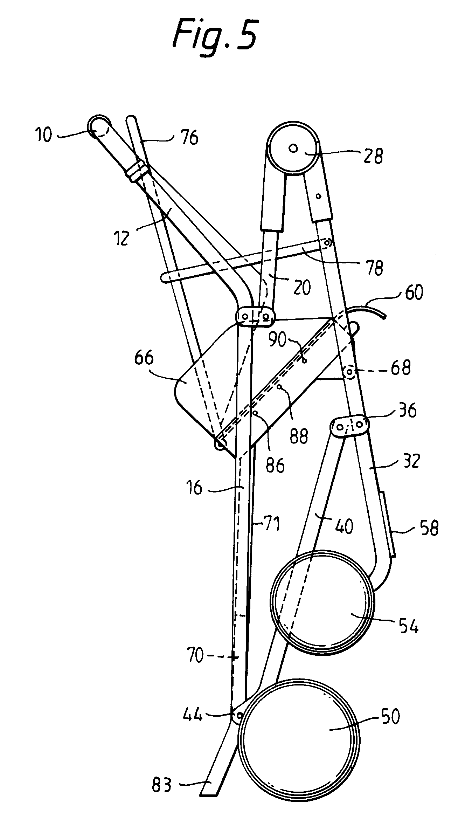

The pivot joints 28 and 30 are knuckle joints of known type which prevent angular movement of the upper front members 20 and 22 in the clockwise direction from the position shown in Figure 1. When the pushchair is to be folded, the joints 24 and 26 are displaced forwardly and upwardly first to the position shown in Figure 4 and then to the fully folded position shown in Figure 5, the telescopic struts 70, 72 extending to permit this movement. As can be seen in Figure 5, the bottom ends 83 of the rear legs 16 and 18 project level with the bottom of the periphery of the rear wheels 42, 44 so as to allow the pushchair to be stood on end when folded.

When the backrest 76 is in the position shown in Figure 1, a spring-loaded bolt 84 (Figure 3), mounted on the underside of the seat portion 60, engages with a hole 86 in the side member 66. Disengagement of the bolt 84 from the hole 86 allows the seat portion 60 to slide forwards so that the backrest 76 is positioned in a partly reclined position with the bolt 84 engaging in a second hole 88. The seat portion 60 can slide further forwards to put the backrest 76 in a fully reclined position level with the seat 60 with the bolt 84 engaging in a third hole 90. In this position, an infant can be positioned either with his head towards the handle 10, or with his head away from the handle 10 so as to face an adult pushing the pushchair.

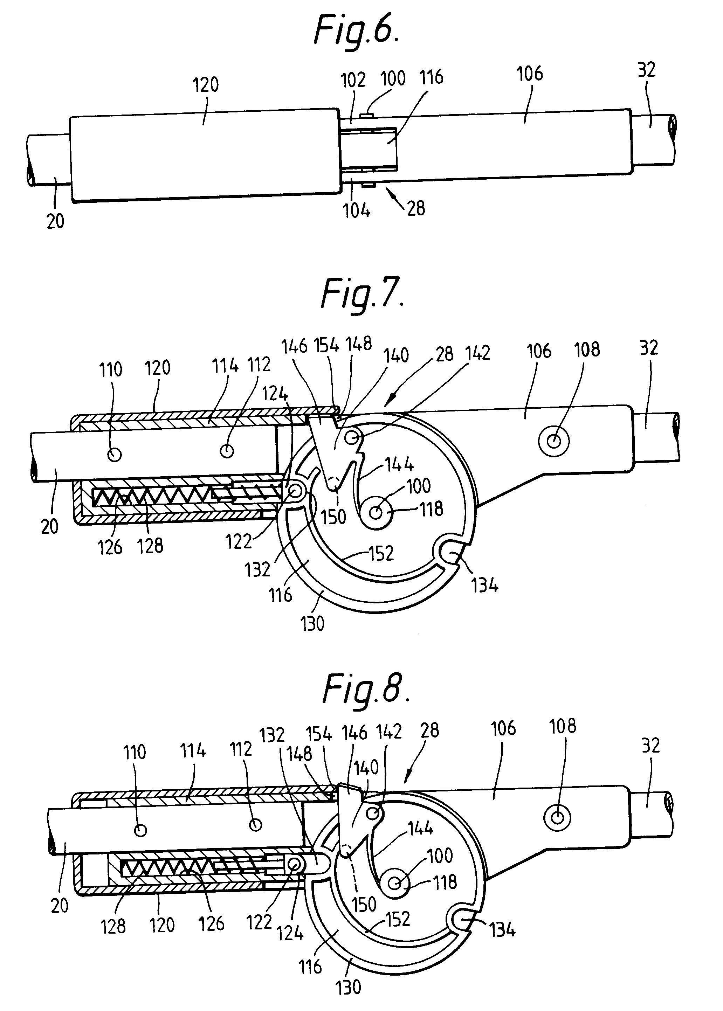

Referring to Figures 6 and 7, the pivot joint 28 comprises a hinge pin 100 extending between the limbs 102 and 104 of a bifurcated lower end piece 106 which is fastened to the upper end of the front leg 32 by a rivet 108. The end piece 106 has a cylindrical flange 104 coaxial with the pin 100.

The bottom end of the upper front member 20 is secured by rivets 110 and 112 to an upper end piece 114 which has central limb 116 extending between the limbs 102 and 104 of the lower end piece 106. The central limb 116 has a boss 118 journalled on the hinge pin 100. A sleeve 120 is slidably mounted on the upper end piece 114. A transverse pin 122 couples the sleeve 120 to a locking plunger 124 which is slidable in a bore 126 in the upper end piece 114. A compression spring 128 engages between the inner end of the bore 126 and the locking plunger 124 so as to bias the latter into abutment with the outer surface of a cylindrical flange 130 on the central limb 116. The flange 130 has a first locking notch 132 with which the plunger 124 engages when the pushchair is in its erect configuration as illustrated in Figure 1, and a second notch 134 with which the plunger 124 engages when the pushchair is in its fully folded configuration as illustrated in Figure 5.

A pawl 140 is pivotally mounted on a pin 142 secured to the bottom end of the upper front member 20. The pawl 140 has an integrally moulded leaf spring 144 which abuts against the boss 118 so as to bias the tip 146 of the pawl 140 through a slot 148 in the upper end piece 114 into engagement with the inner surface of the sleeve 120. On a heel opposite to the tip 146, the pawl has a cam follower 150 which engages with a cam flange 152 formed on the end piece 106 inside the cylindrical flange 130. The cam flange 152 is at a maximum radial distance from the hinge pin 100 at the orientations of the follower 150 when the locking plunger 144 is engaged in either the notch 114 or the notch 116 and is at a smaller radial distance at orientations between these two positions.

Figure 7 illustrates the mechanism in the position when the hinge is locked with the pushchair erect. When the pushchair is to be folded, the sleeve 120 is pulled along the upper front member 114 away from the hinge pin 100. The locking plunger 124 disengages from the notch 114 and the bottom edge 154 of the sleeve 106 moves clear of the pawl tip 146 which therefore moves outwardly from under the end 154 of the sleeve 120 until the follower 150 engages with the cam flange 152. If the sleeve 120 is now released, the spring 128 biasses the end 154 of the sleeve 120 into engagement with the pawl tip 146 which thus holds the locking plunger 124 clear of the flange cylindrical 130 and therefore out of engagement with the notch 132, as shown in Figure 8. The joint is therefore free to fold.

As the upper front member 20 pivots in the anti-clockwise direction about the hinge pin 100 (as viewed in Figures 7 and 8), the cam follower 150 on the pawl 140 is progressively displaced by the cam flange 152 until the pawl tip 146 disengages from under the end 154 of the sleeve 120 which is therefore displaced by the spring 128 to bring the locking plunger 124 into engagement with the cylindrical flange 130. Further angular movement brings the locking plunger 124 into alignment with the notch 134 into which it is displaced by the spring 128 so as to lock the front upper member 20 in its folded position relative to the front leg 32.

When the pushchair is to be re-erected, the sleeve 120 is once again pulled outwardly until the pawl tip 146 is free to pass under the end 154 of the sleeve 120. The pushchair is then folded to its erect position, the cam flange 152 causing disengagement of the pawl 140 from the sleeve 106 before the locking plunger 144 has come into alignment with the notch 114. When it does come into such alignment, the spring 110 displaces it into engagement with the notch 114 so as to lock the pushchair in its erect position.

The pivot joint 30 on the other side of the pushchair is substantially the same as the pivot joint 28 except that it does not have a pawl 140. It is necessary to pull on the sleeves 106 of both pivot joints before the pushchair can be folded or unfolded but, because of the action of the pawl 140 in the pivot joint 28, it is only necessary to hold on to the sleeve 120 of the pivot joint 30 during the folding movement. The omission of the pawl 140 from the pivot joint 30 ensures that it is not possible for the pushchair to be left in its fully erect position with both pivot joints 28 and 30 unlocked.

## Claims

1. A locking hinge having first and second members (106, 114) pivotally interconnected for relative angular movement about a hinge axis (100) and a manually releasable locking mechanism for securing the first member (106) at a predetermined orientation relative to the second member (114), wherein the first member (106) has a cylindrical latch-receiving surface (130) co-axial with the hinge axis (100) and containing a latching recess (132) and the locking mechanism comprises a detent (124) mounted on the second member (114) engageable in the latching recess (132), a spring (128) for biassing the detent (124) into engagement with the latch-receiving surface (130), manually operable release means (120) for displacing the detent (124) to a disengaged position clear of the latch-receiving surface (130), automatically engaging interlock means (140) for retaining the detent (124) in its disengaged position, and cam means (152) for causing disengagement of the interlock means (140) when the first member (106) is at a second predetermined orientation relative to the second member (114), characterised in that the detent (124) is fast with the manually operable release means (120) which is slidably mounted on the second member (114).

2. A locking hinge according to claim 1, wherein the manually operable release means comprises a sleeve (120) slidably mounted on the second member (114).

3. A locking hinge according to claim 1 or 2, wherein the interlock means comprises a pawl (140) pivotally mounted on the second member (114) and adapted to engage with the manually operable release means (120).

4. A locking hinge according to claim 3, wherein the cam means comprises a cam surface (152) fast with the first member (106) and a cam follower (150) on the pawl (140).

5. A locking hinge according to claim 3 or 4, further comprising spring means (144) biasing the pawl (140) towards its engaged position to cause automatic engagement thereof.

6. A locking hinge according to claim 5, wherein the spring means (144) is integral with the pawl (140).

7. A pushchair having a frame comprising a pair of rear members (16, 18), each of which has a respective rear wheel (50, 52) journalled on its bottom end, a pair of handle support members (12, 14) supporting a handle (10) and each rigidly projecting from the upper ends of a respective rear member (16, 18), a pair of front members (20, 22; 32, 34), each having its upper end pivotally connected to the upper end of a respective rear member (16, 18) and having a front wheel (54, 55, 56, 57) journalled on its bottom end and a pair of bottom members (40), each of which is pivotally connected at one end (44, 46) to a respective rear member (16, 18) and at the other end (36, 38) to a respective front member (20, 22; 32, 34), each front member (20, 22; 32, 34) being formed from pivotally interconnected upper and lower parts (20, 22; 32, 34), characterised in that the upper and lower parts (20, 22; 32, 34) of the front members (20, 22; 32, 34) are pivotally interconnected by respective pivot joints (28, 30) according to any preceding claim, each of which is arranged to allow the upper and lower parts (20, 22; 32, 34) to pivot relative to one another between a first position in which they are in alignment with one another and a second position in which the pivot joints (28, 30) are further from the rear wheels (50, 52) than when they are in the first position.
